# EUROPEAN PATENT SPECIFICATION

(11) **EP 1 601 603 B1**
(45) Date of publication and mention of the grant of the patent: **23.05.2012**
(21) Application number: 04717330.7
(22) Date of filing: 04.03.2004
(51) Int. Cl.: B66C 17/00, B66C 11/16, B62D 65/18, B25J 9/02, B25J 5/04, B66D 3/18

(54) **LOAD TRANSFER DEVICE**
LASTÜBERTRAGUNGSVORRICHTUNG
DISPOSITIF DE TRANSFERT DE CHARGES

(30) Priority: 10.03.2003 SE 0300637
(43) Date of publication of application: 07.12.2005
(73) Proprietor: Binar Quick-Lift Systems AB, 461 38 Trollhättan (SE)
(72) Inventor: KAHLMAN, Sture, S-462 61 Vänersborg (SE); OLSSON, Johan, S-662 91 Amal (SE)
(74) Representative: Johansson, Lars-Erik
(86) International application number: PCT/SE2004/000298
(87) International publication number: WO 2004/080879

(56) References cited:
- FR-A1- 2 666 318
- GB-A- 2 246 216
- SE-B- 466 960
- US-A- 198 718
- US-A- 687 633
- US-A- 4 243 147
- US-A- 4 370 932
- US-A- 5 351 384
- US-A- 5 804 932
- US-A1- 2002 112 016
- US-B1- 6 204 620

## Description

### Field of the Invention

The present invention relates to a load transfer device comprising a traverse device and a load carrying device, wherein said load carrying device is movable in a plurality of directions.

### Technical Background

Nowadays, various types of e.g. robot units are commonly used within industry to transfer work pieces from one workstation to another. The tempo in the industry has risen increasingly over time in order to raise productivity. There has long been a general ambition to raise tempo and a lot of focus has been directed to produce robot units which are fast. Contemporary robots are relatively heavy, which means that the maximum transfer speed is limited, since the weight intrinsically produces a certain inertia and the energy consumption is proportional to the weight and transfer speed. In order to provide sufficient energy to the robot unit the drive system normally result heavy.

Furthermore, many applications also involves relatively large transfers, sometimes up to more than ten meters which means that conventional robot unit needs to be moved a long distance along a supporting element. Often it is relatively heavy work pieces that are being transferred. This taken together result in high demands on stability in the load transfer system in order to avoid e.g. a decrease in maneuverability, instability etc.

By positioning the motors, which are among the heavier components, on the support structure, a relatively stable working environment for the heavy motors is accomplished. However, these motors need to communicate with the transmitters arranged on preferably the moving parts of the load transfer device in order to perform a controlled movement. Thus, there are normally to be found a lot of drive belts and especially cables interconnecting static components with movable parts on such prior art load transfer devices. These cables are often provided with sensitive connections and couplings, which in this dynamic environment will be quite exposed to wear, providing a risk for e.g. malfunction and an increasing need for maintenance. Hence lot of effort has been directed to construct load transfer devices which are robust and stable but also to adapt the process to be as simple as possible.

This in turn has the effect that robot units although working fast may be difficult to use when there are changes in production etc, since they are adapted to suite one particular purpose in a specific purpose. In today's industry the life cycle of a product is often short leading to an increased demand in utilizing more flexible load transfer devices. Hence, it is desirable to present a load transfer device, capable of load transfer in a three-dimensional space, which can be used in a flexible manner. In addition there is also a need for a load transfer device which is easy and fast to install.

Further, in US 4243147 there is shown a three-dimensional lift intended for use by a handicapped person, wherein channels or rails in a parallel configuration are arranged with a traveling bridge traversing the length of the channels. Two motors are arranged to turn four separate sprockets used for drag elements, in the form of chains, on end portions of the traveling bridge so as to provide movement of the traveling bridge. A head is mounted to travel across the bridge, which head has a sling intended for supporting a person. A remote control is hung from the head so that it is accessible to the person supported by the sling, giving the person the capability to operate the lift. However, a lift arrangement according to US 4243147 is both complicated and time consuming to install.

### Summary of the Invention

The object of the present invention is to provide a load transfer device that overcomes the above issues, and presents a solution which is capable of handling a load transfer in a fast and stable manner, even when handling heavy goods.

A further object of the present invention is to provide a load transfer device which is easy and fast to install but also flexible to use. It is still a further object to provide a load transfer device which is excellent in control and maneuverability both in the lateral and vertical directions and hence present a load transfer device, which allows for sound working conditions and enable support during heavy and/or complicated lifting operations as well as fully automatized lifting operations in a three-dimensional space.

These and other objects are achieved by a load transfer device according to claim 1. Preferred embodiments of the invention are defined in the dependent claims 2-17. According to the invention there is provided a load transfer device comprising a traverse device and a load carrying device, wherein said load carrying device is movable in a three-dimensional space, wherein said traverse device comprises support elements, for supporting a traveling bridge arranged to travel along said support elements, and a carriage arranged to travel back and forth on said traveling bridge, wherein lateral movement of said load carrying device is effected by a driving device, said driving device is controlled by a control unit, said driving device comprises at least two motors secured to said carriage and is provided with driving wheels and two drag elements secured at its end portions to opposite end portions of said support elements and crossing at said traveling bridge, wherein said drag elements crossing each other at said carriage arranged such that a first driving wheel unit works in contact with one drag element and a second driving wheel unit works in contact with another drag element, thereby moving the carriage and hence the load carrying device in the lateral direction during operation.

The inventive driving device is easy to manufacture and install since the carriage can be made in a standardized manner and the support structure together with the drag elements are simple to adapt to suit the location in question. Furthermore, the need for providing the whole arrangement with cables for transmitting control data is reduced to a zone within proximity to the carriage. This in turn reduces the need for providing the arrangement with cable racks, interconnecting e.g. motors and sensors, adapted to follow the traverse device and yet maintain contact to the interconnected components. Since it is a dynamic system, often covering a large working area, and frequently used, the risk for play in the connections of the control system interconnecting, e.g. motors, transmitters and recording sensors may lead to downtime and reduced productivity. Hence, the load transfer device according to the invention is also less sensitive to such incidents.

In accordance with a preferred embodiment the drag elements, on respective end portion of said traveling bridge, are arranged at least partly around an axle unit from different directions. This arrangement provides for stability, smoothness and precision in the movement of the traverse device. The increased stability achieved by using this principle provides for a surprisingly controlled movement of the traverse device even when exposed to heavy loading and sudden accelerations.

Preferably, the drag elements, on respective end portion of said traveling bridge, are arranged at least partly around an axle unit from different directions and in separate grooves.

More preferably, the drag elements, on respective end portion of said traveling bridge, are preferably arranged in a generally ninety degree turn around an axle unit from different directions and in separate grooves. By this arrangement possible imperfections will be almost automatically corrected due to the co-working geometry of the drag element pattern.

According to a preferred embodiment of the load transfer device the drag elements are in non-slidable contact with the corresponding driving wheel unit and the axle unit, said axle unit comprising a rotatable wheel unit.

Further, the drag elements are secured tethered to at least one end portion of the support element. Hence, a desired pretension in the system is accomplished. Advantageously, the load carrying device is connected to a hoist motor, said hoist motor being operatively controlled by said control unit, for controlled vertical movement of the load carrying device. This embodiment provides for efficient and smooth operability, sparing difficult lifts for personnel involved with installation of the goods to be lift in. According to a first embodiment of the load transfer device the load carrying device is connected to a linear guide, which is relatively stiff against lateral force impact.

Preferably, said motors are capable of clockwise and counterclockwise turning, which in combination with the inventive pattern of the drag elements provide for that the load transfer device according to the invention will be able to operate in a stable manner, covering a large surface area.

According to a preferred embodiment of the invention a working cycle is programmed in a control computer of said control unit, said working cycle providing input signals to any one of the driving device, the load carrying device and hoist motor for controlled operation of said load transfer device. Thus, the load transfer device is capable of being operated in a fully automatized manner.

Advantageously, the load transfer device according to a first embodiment of the invention is provided with a sensor for detecting a moving object, said sensor providing input signals to said control unit for docking said load carrying device in proximity to said moving object and following said moving object.

According to a second preferred embodiment of the invention the load carrying device is preferably operatively connected to a control device, said control device being used as a reference of force impact. This will allow for a manual operation mode of the load transfer device. The manual operating mode preferably coexists with the following mode of the above described first preferred embodiment in such a manner that manual operation is possible within a determined zone in relation to the moving object. Thus, it is realized that the load transfer device according to the second embodiment of the invention may be utilized in a highly flexible manner in line manufacturing.
Furthermore, the control device is advantageously provided with a load cell package for detecting force impact allowing for controlled and precise operability.

Preferably, the load carrying device is adapted to be set in a mode, in which mode said load carrying device is manually guidable in a three-dimensional space, and wherein movement of said load carrying device is controlled by recorded and transmitted force impacts from said load cell package to said driving device and hoist motor.

In accordance with a still preferred embodiment the load carrying device is adapted to stop when a threshold value of force impact is recorded by said load cell package. Since the speed of the load transfer arrangement is normally up to or around 1 m/s it is desirable for safety reasons that any sudden external force impact leads to stop. Thus accidents or damage may be avoided.

Finally, it is realized from the above that various features of the different embodiments may be combined in order to further adapt the load transfer device within the scope of protection as defined by the claims.

### Brief Description of the Drawings

A currently preferred embodiment of the present invention will now be described in more detail, with reference to the accompanying drawings, in which:
fig. 1 is a perspective view of an example of a load transfer device according to an embodiment of the invention,
fig. 2 is a side view of fig 1,
fig. 3 is a sectional side-view taken along III-III in fig. 2,
fig. 4 is a partial perspective top view of a carriage in accordance with an embodiment of the invention,
fig. 5 is a partial perspective top-view of a carriage provided in a traveling bridge in accordance with an embodiment of the invention,
fig. 6 is a schematic top-view of the drag element path of the present invention,
fig. 7 is a schematic view of the control unit and how it is connected to the motors and a control unit,
fig. 8a-8c is a sequence-view illustrating an alternative embodiment of the invention capable of following a moving object

### Detailed Description of Preferred Embodiments

A first embodiment of the invention related to a load transfer device will be described in more detail in the following with reference to the accompanying drawings.

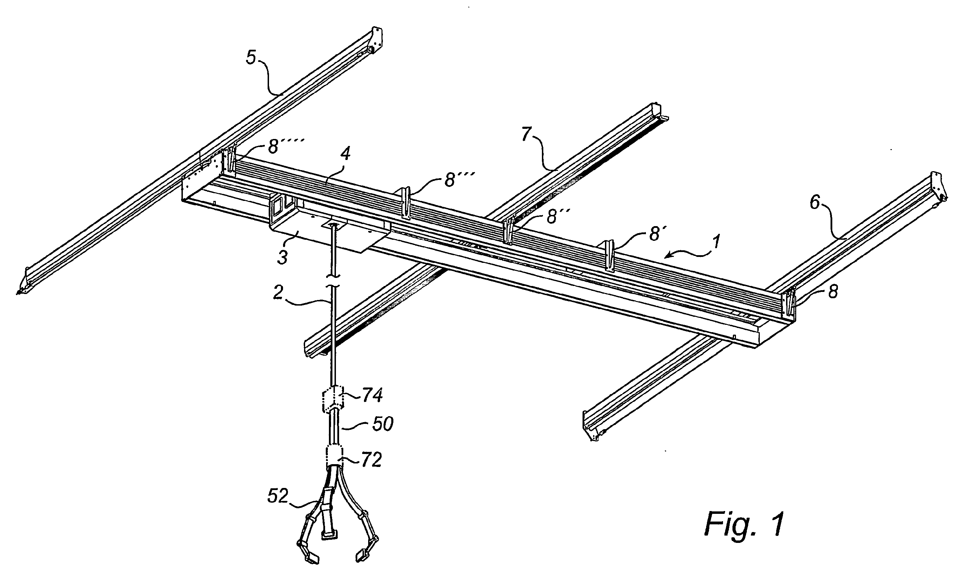

Referring now to Fig. 1, wherein a load transfer device 1 according to the invention is shown. A control device 50 is arranged along a linear guide 2 between a traverse device and a load carrying device 52. The load carrying device movable in a three-dimensional space. Lateral movement of said load carrying device 52 is controlled by a driving device. The load carrying device 52, which is for example a gripping device, a hook, a magnet, a suction component etc., is capable of being supported by a linear guide 2. The linear guide is torque stiff.

Furthermore, said traverse device is provided with support elements 5, 6, 7 for supporting a traveling bridge 4. The traveling bridge 4 is arranged to travel along said support elements 5, 6, 7. A carriage 3 is in turn arranged to travel back and forth on said traveling bridge 4. The traveling bridge 4 and the carriage 3 are suitably provided with guide wheels 19, 19', 19", 19"', runners or other roller or slide devices for enabling horizontal movement along their associated path in a stable manner.

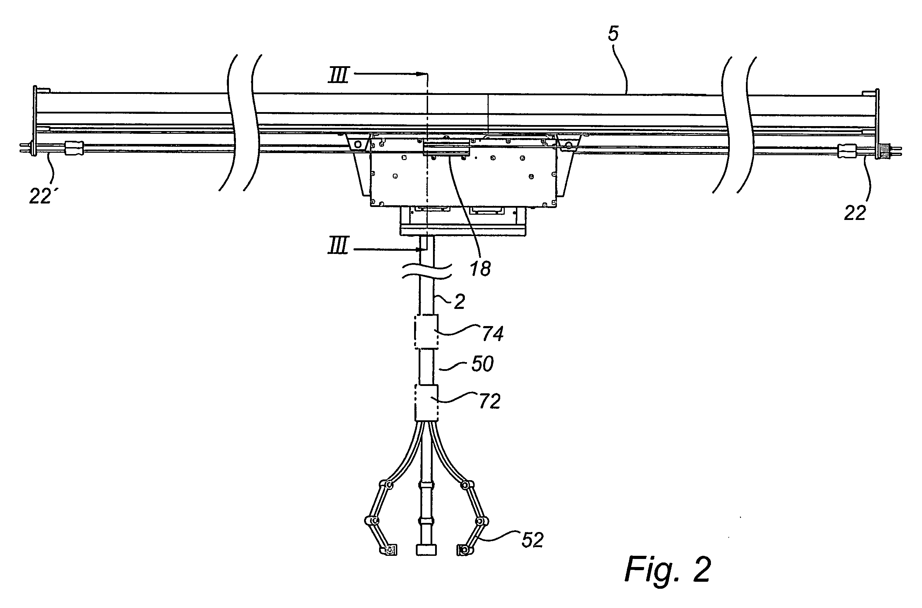

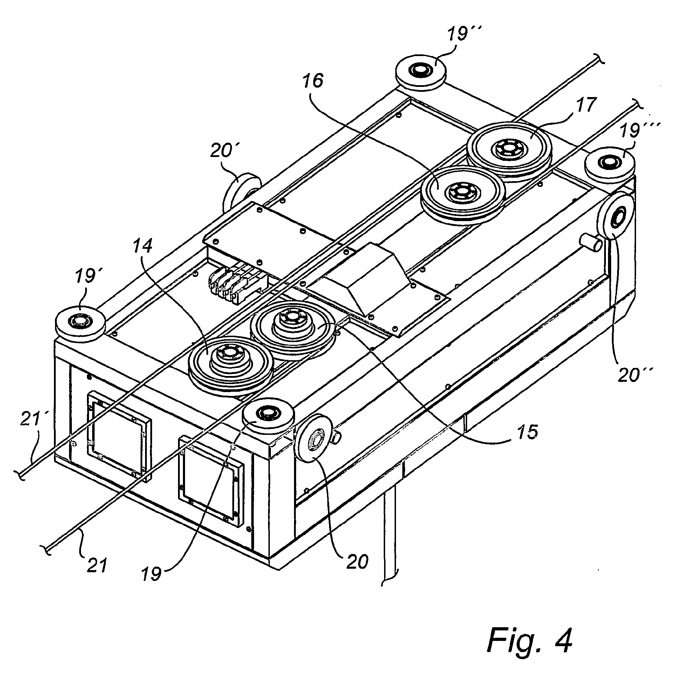

Referring now to fig 2, wherein the load transfer arrangement is shown from the side. It will be noted that the drag element are arranged tethered to the end portions of the support element 5. According to an alternative embodiment (not shown) one end portion of the drag element is arranged tethered to the support element and the other end portion of said drag element is arranged fixed. The driving device preferably comprises two motors (not shown in fig 2) secured to said carriage 3. Further with reference to figs 2 and 4, two drag elements 21, 21' are secured at its end portions to opposite end portions of said support elements 5, 6 and crossing at said traveling bridge 4. The drag elements 21, 21' crossing each other at said carriage 3 such that a driving wheel unit 15 of one motor 10 works in contact with one drag element 21 and a second driving wheel unit 16 of the second motor 11 works in contact with another drag element 21'. In proximity to each of the driving wheel units 15, 16 is a guide wheel unit 14, 17 located in a freewheeling manner in order to guide the drag elements 21, 21' in a desired path. Preferably, each drag element describes a substantially 8-shaped path when passing the carriage. Guide rollers 19, 19', 19" , 19"'; 20, 20', 20", 20"', are provided on the carriage for enabling movement of the carriage along the traveling bridge 4.

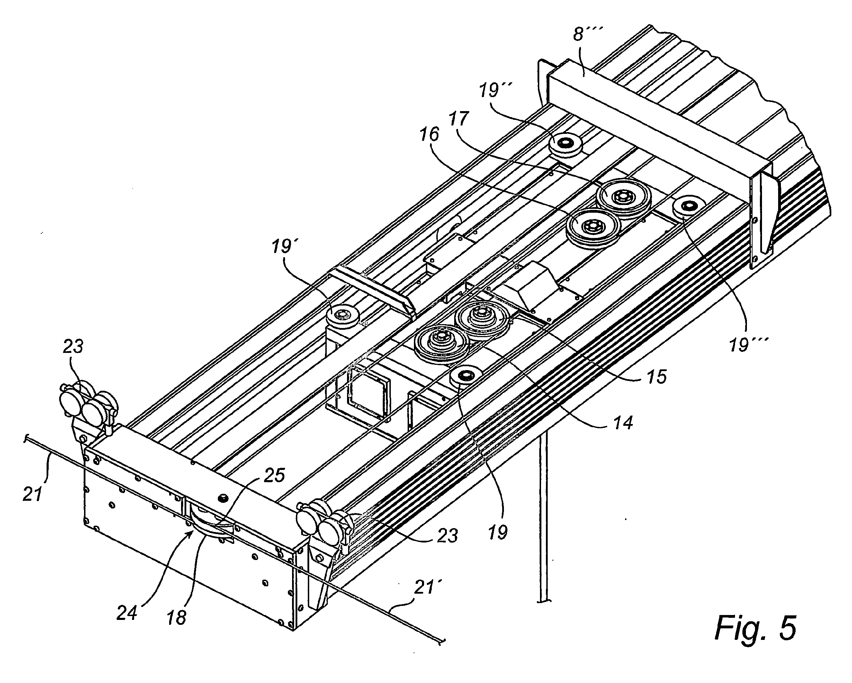

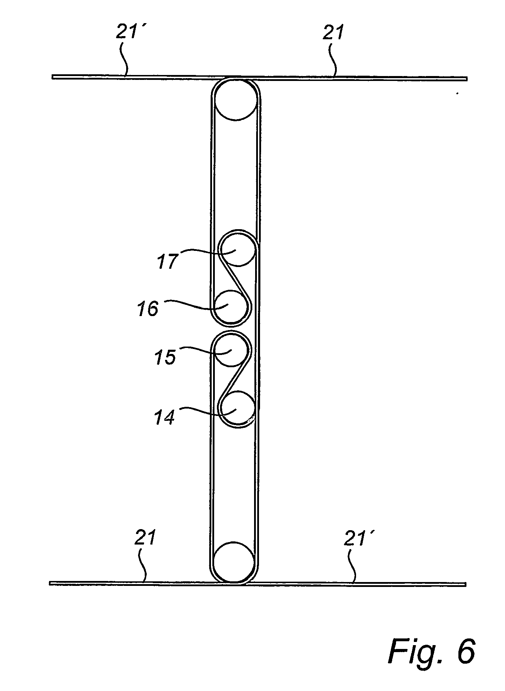

With reference to fig 1-5 and possibly best illustrated by fig 6, the path of one drag element 21 will be described. The first drag element 21 path starts in one end portion of a support element 5 where the drag element is secured by a spring unit 22 or the like in order to maintain a desired pretension in the driving device. The drag element 21 then continues to an axle unit 18 which is located on the respective end portion of the traveling bridge 4, where the path turns about 90 degrees and progresses further along the traveling bridge 4 and around one driving wheel 15 and one guide wheel 14. After having described this almost 8-shaped path the drag element 21 progresses to the other axle unit 18 where it makes a new 90 degree turn and continues towards opposite end of the other support element 5, 6 in relation to where the drag element 21 started the path. The other drag element 21' describes a corresponding path although starting and ending in the two other corners of the operation area of the load transfer device 1. The axle unit 18 has two separate grooves, one for each drag element 21, 21'. The combination of the two drag element paths makes the axle unit 18 locked from two directions providing the driving device with increased stability. The axle unit 18 is arranged rotatable and will rotate as soon as there is any movement of he carriage due to the non-slidable contact between the drag elements 21, 21' and the axle unit 18. Preferably, the axle unit 18 is a wheel provided with two grooves. One drag element running in one groove.

According to one embodiment of the invention the drag element is a line or similar made of polyamide. One example of a useful polyamide is a polyamide with para structure. The material properties of the drag element will then assure for suitable tension in the system as well as consistent characteristics with respect to fatigue. The friction between the drag element and possible guide wheels 14, 17, axle units 18, and driving wheel units 15, 16 together with the drag element path will prevent the drag element from sliding when the driving device is in operation. Thus, a stable performance of the traverse device is accomplished.

Alternatively, the drag element is a drive belt arranged for gripping contact with the driving wheel units, the guide wheels and the axle units. According to a third aspect of the invention the drag element is a steel wire arranged for non-slidable contact with the driving wheel units, etc.

According to a preferred embodiment the carriage 3 is thus moved by actuation of the two motors and hence the load carrying device 52 will follow. The motors 10, 11 are capable of clockwise and counterclockwise turning providing for that two motors in combination with the drag element paths described above will be sufficient to cover an operating area in the horizontal plan generally defined by outer support elements 5, 6 and their respective end portions.

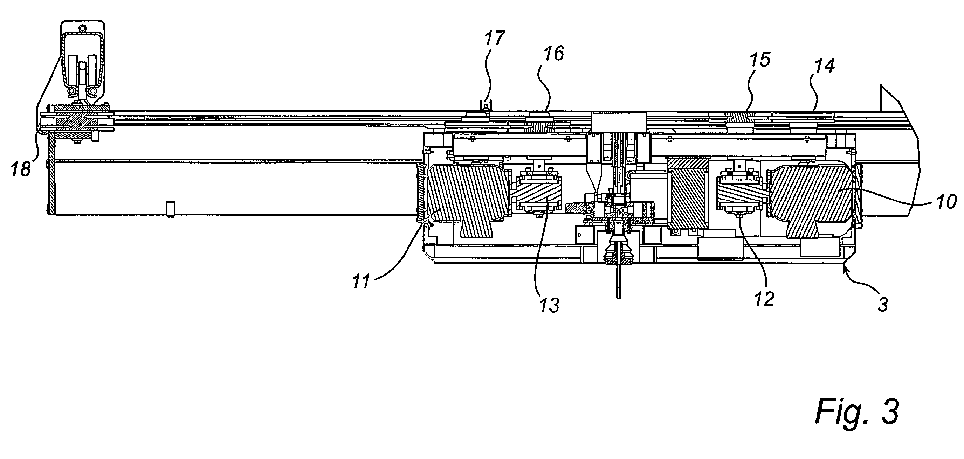

As can be seen in figs 2 and 3, the load carrying device 52 is connected to a hoist motor 71. This hoist motor 71 is capable of clockwise and counterclockwise turning. Preferably, a moment motor is used.

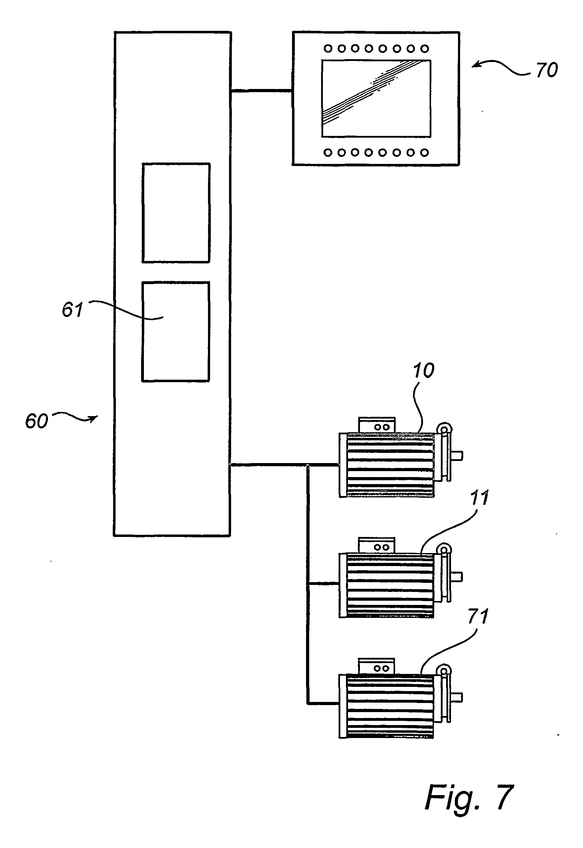

Fig 7 shows a diagrammatic representation of an operator panel 70 as it is known. The operator panel 70 is connected to a control unit 60, which in turn, controls the motional plan for the load transfer device 1 by means of the three motors 10, 11, 71.

The control unit 60 comprises a control computer 61 having a memory unit, a processor unit, etc. The control computer 61 coordinates the motions of the motors 10, 11, 71 so that the motional pattern of the load transfer device is accomplished when the load transfer device is in a automatized mode. Furthermore, the control computer coordinates the motions of the motors with respect to detected input signals from the control device 50 when the load transfer device is in a manual operating mode.

The control computer obtains, via the registrered input signals, continous information on the situation of the shafts, this information being continously used by the control computer 61 to control the motors. The control unit 60 is also used for control of the load carrying device 52 when an automatized load carrying device 52 is used.

According to the preferred embodiment of the invention the load carrying device 1 is connected to a vertically linear guide 2 having a control device 50 comprising a sensor 72, preferably a load cell package 74, which is used as reference of force impact for guiding and controlling the driving device, and thus the load carrying device 52, in the lateral direction. In this case the shear of the linear guide 2 is recorded by the load cell package 74 and transmitted to the driving device and also to the load hoist motor 71, via the control unit 60, for enabling controlled movement of the load transfer device 1 and also the hoist motor 71. Thus, sudden impact to the load transfer device will immediately be recorded and recognized by the control unit 60 and the movement of the load carrying device 52 can be stopped immediately.

A working cycle is programmed in a control computer 61 of said control unit 60, said working cycle providing input signals to any one of the driving device, the load carrying device 52 and hoist motor 71 for controlled operation of said load transfer device 1.

It is realized from the above that the load transfer device 1 according to a first embodiment is capable of automatized operation. It is also realized that the load transfer device is capable of being operated manually. The load carrying device 52 is then adapted to be set in a mode, in which mode said load carrying device 52 is manually guidable in a three-dimensional space, and wherein movement of said load carrying device 52 is controlled by recorded and transmitted force impacts from said load cell package 74 to said driving device and hoist motor 71.

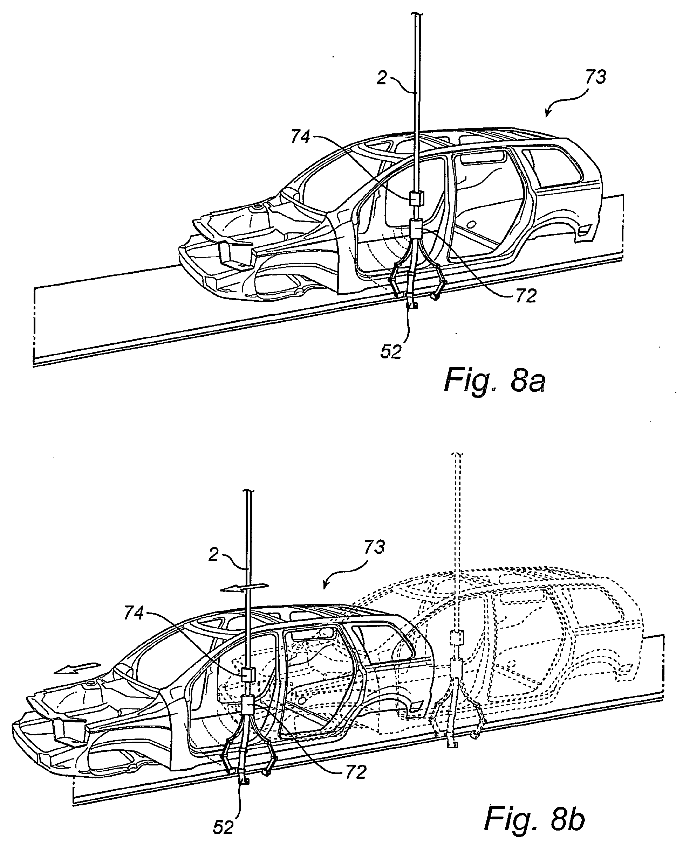

The control unit is preferably fitted with logic allowing for combinations of an automatized operation mode still enabling manual intervention. With reference to figs. 8a-8c, an example of such a working cycle will now be described.

The load transfer device 1 in fig 8a is provided with a sensor 72 for detecting a moving object 73. The sensor 72 provides input signals to the control unit 60 for docking said load carrying device 52 in proximity to said moving object 73 and following said moving object 73. In fig 8b it is illustrated a load carrying device following a moving object 73.

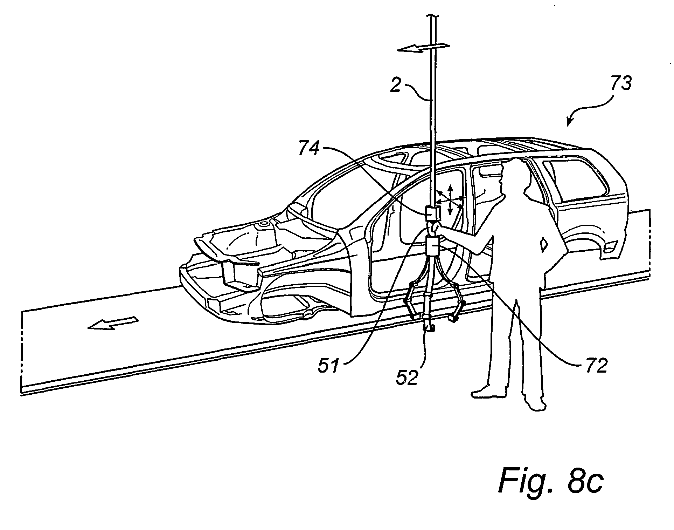

The load carrying device 52 is operatively connected to a control device 50, said control device 50 being used as reference of force impact. An operator holding the control device 50 will appear in fig 8c. The operator will now be able to control the load carrying device in a manual mode. Preferably, the manual mode is activable within a determined zone, said zone is determined in relation to a moving object. Thus a "virtual room" is created in which the operator may use the load carrying device for e.g. installing seats in a vehicle (not shown).

For safety reasons the load carrying device 52 is adapted to stop when a threshold value of force impact is recorded by said load cell package. Thus, the risk for damage or accidents is reduced. The operating speed will of course differ but normally not exceed 1 m/s and hence the impact forces can kept to a minimum with a reasonable response time for the control unit 60 to activate the stop function.

Although the present invention has been described in connection with particular embodiments thereof, it is to be understood that various modifications, alterations and adaptations may be made by those skilled in the art without departing from the spirit and scope of the invention. It is realized that various drag elements may be used e.g. a line, a wire, a drive belt or a chain etc. The material of the drag elements may also be altered depending on specific design criteria. Features from various described embodiments may be combined in order to realize further embodiments within the scope of the claimed invention.

## Claims

1. A load transfer device (1) comprising a traverse device and a load carrying device (52), wherein said load carrying device (52) is movable in a three-dimensional space, wherein said traverse device comprises support elements (5, 6), for supporting a traveling bridge (4) arranged to travel along said support elements (5, 6), and a carriage (3) arranged to travel back and forth on said traveling bridge (4), wherein lateral movement of said load carrying device (52) is effected by a driving device, said driving device is controlled by a control unit (60), said driving device comprises at least two motors secured to said carriage (3) and is provided with driving wheels (15,16) and two drag elements (21, 21') secured at its end portions to opposite end portions of said support elements (5, 6) and crossing at said traveling bridge (4), wherein said drag elements (21, 21') crossing each other at said carriage (3) arranged such that a first driving wheel unit (15) works in contact with one drag element (21) and a second driving wheel unit (16) works in contact with another drag element (21'), thereby moving the carriage (3) and hence the load carrying device (52) in the lateral direction during operation, **characterized in that** said load carrying device (52) is connected to a torque stiff linear guide (2), having a control device (50) comprising a sensor (72) used as reference of force impact arranged for guiding and controlling the driving device and thus the load carrying device (52) in the lateral direction and that the drag elements (21, 21'), on respective end portion of said traveling bridge (4), are arranged at least partly around an axle unit (18) from different directions and in separate grooves (24, 25).

2. The load transfer device (1) according to claim 1, wherein the drag elements (21, 21'), on respective end portion of said traveling bridge (4), are arranged at least partly around an axle unit (18) from different directions.

3. The load transfer device (1) according to any one of claims 1-2, wherein the control unit (60) is fitted with logic arranged to allow for combinations of automatized operation enabling manual intervention.

4. The load transfer device (1) according to any one of claims 1-3, wherein the drag elements (21, 21'), on respective end portion of said traveling bridge (4), are preferably arranged in a generally ninety degree turn around an axle unit (18) from different directions and in separate grooves (24, 25).

5. The load transfer device (1) according to any one of claims 1-4, wherein the drag elements (21, 21') are in non-slidable contact with the corresponding driving wheel unit (15, 16).

6. The load transfer device (1) according to any one of claims 2-5, wherein the drag elements (21, 21') are in non-slidable contact with the corresponding driving wheel and the axle unit (18), said axle unit (18) comprising a rotatable wheel unit.

7. The load transfer device (1) according to any one of claims 1-6, wherein said drag elements (21, 21') are adapted for non-slidable contact with anyone of the components in the group of driving wheel units (15, 16), axle units (18) and guide wheels (14, 17).

8. The load transfer device (1) according to any one of claims 1-7, wherein the drag elements (21, 21') are secured tethered to at least one end portion (22, 22) of the support element (5, 6).

9. The load transfer device (1) according to any one of claims 1-8, wherein the load carrying device (52) is connected to a hoist motor (71), said hoist motor (71) being operatively controlled by said control unit (60), for controlled vertical movement of the load carrying device (52).

10. The load transfer device (1) according to any one of claims 1-9, wherein any motor (10, 11) of said driving device is capable of clockwise and counterclockwise turning.

11. The load transfer device (1) according to any one of claims 1-10, wherein a working cycle is programmed in a control computer (61) of said control unit (60), said working cycle providing input signals to any one of the driving device, the load carrying device (52) and hoist motor (71) for controlled operation of said load transfer device (1).

12. The load transfer device (1) according to any one of claims 1-11, wherein said sensor (72) is arranged to detect a moving object (73) and to provide input signals to said control unit (60) for docking said load carrying device (52) in proximity to said moving object (73) and following said moving object (73).

13. The load transfer device (1) according to claim 1, wherein the control device (50) is provided with a load cell package (74).

14. The load transfer device (1) according to claim 13, wherein said load carrying device (52) is adapted to be set in a mode, in which mode said load carrying device (52) is manually guidable in a three-dimensional space, and wherein movement of said load carrying device (52) is controlled by recorded and transmitted force impacts from said sensor (72) and said load cell package (74) respectively to said driving device and hoist motor (71) respectively.

15. The load transfer device (1) according to claim 14, wherein said manual mode is activable within a determined zone.

16. The load transfer device (1) according to claim 14, wherein said manual mode is activable within a determined zone, said zone is determined in relation to a moving object.

17. The load transfer device (1) according to any one of claims 13-16, wherein the load carrying device (52) is capable to stop when a threshold value of force impact is recorded by said load cell package (74).

## Patentansprüche

1. Lasttransfereinrichtung (1),
umfassend eine Traversenvorrichtung und eine Lasttragvorrichtung (52),
wobei die Lasttragvorrichtung (52) in einem dreidimensionalen Raum beweglich ist, wobei die Traversenvorrichtung Halteelemente (5, 6) zum Halten einer fahrbaren Brücke (4), die eingerichtet ist, entlang der Halteelemente (5, 6) zu fahren, und einen Schlitten (3) aufweist, der eingerichtet ist, auf der fahrbaren Brücke (4) vor und zurück zu fahren,
wobei eine seitliche Bewegung der Lasttragvorrichtung (52) durch eine Antriebsvorrichtung bewirkt wird,
wobei die Antriebsvorrichtung durch eine Steuereinheit (60) gesteuert wird,
wobei die Antriebsvorrichtung mindestens zwei Motoren umfasst, die an dem Schlitten (3) befestigt sind, und mit Antriebsrädern (15, 16) und zwei Zugelementen (21, 21') versehen ist, die an ihren Endabschnitten an gegenüberliegenden Endabschnitten der Halteelemente (5, 6) befestigt sind und sich an der fahrbaren Brücke (4) kreuzen, wobei die Zugelemente (21, 21'), die sich an dem Schlitten (3) kreuzen, so eingerichtet sind, dass eine erste Antriebsradeinheit (15) in Kontakt mit einem Zugelement (21) arbeitet und eine zweite Antriebsradeinheit (16) in Kontakt mit einem anderen Zugelement (21') arbeitet, wodurch der Schlitten (3) und daher die Lasttragvorrichtung (52) während des Betriebs in der seitlichen Richtung bewegt wird, **dadurch gekennzeichnet,**
**dass** die Lasttragvorrichtung (52) mit einer drehmomentsteifen linearen Führung (2) verbunden ist, eine Steuervorrichtung (50) aufweist, die einen Sensor (72) umfasst, der als eine Referenz einer Krafteinwirkung verwendet wird, eingerichtet zum Führen und Steuern der Antriebsvorrichtung und daher der Lasttragvorrichtung (52) in der seitlichen Richtung, und
**dass** die Zugelemente (21, 21'), an einem jeweiligen Endabschnitt der fahrbaren Brücke (4), zumindest teilweise um eine Achseinheit (18) herum aus verschiedenen Richtungen und in separaten Rillen (24, 25) angeordnet sind.

2. Lasttransfereinrichtung (1) nach Anspruch 1, wobei die Zugelemente (21, 21'), an einem jeweiligen Endabschnitt der fahrbaren Brücke (4), zumindest teilweise um eine Achseinheit (18) herum aus verschiedenen Richtungen angeordnet sind.

3. Lasttransfereinrichtung (1) nach einem der Ansprüche 1 bis 2, wobei die Steuereinheit (60) mit einer Logik versehen ist, die eingerichtet ist, Kombinationen automatischen Betriebs zu gestatten, die ein manuelles Eingreifen ermöglichen.

4. Lasttransfereinrichtung (1) nach einem der Ansprüche 1 bis 3, wobei die Zugelemente (21, 21'), an einem jeweiligen Endabschnitt der fahrbaren Brücke (4), bevorzugt in einer Drehung von etwa neunzig Grad um eine Achseinheit (18) herum aus verschiedenen Richtungen und in separaten Rillen (24, 25) angeordnet sind.

5. Lasttransfereinrichtung (1) nach einem der Ansprüche 1 bis 4, wobei die Zugelemente (21, 21') in nicht gleitendem Kontakt mit der entsprechenden Antriebsradeinheit (15, 16) stehen.

6. Lasttransfereinrichtung (1) nach einem der Ansprüche 2 bis 5, wobei die Zugelemente (21, 21') in nicht gleitendem Kontakt mit dem entsprechenden Antriebsrad und der Achseinheit (18) stehen, wobei die Achseinheit (18) eine rotierbare Radeinheit umfasst.

7. Lasttransfereinrichtung (1) nach einem der Ansprüche 1 bis 6, wobei die Zugelemente (21, 21') für einen nicht gleitendem Kontakt mit einer der Komponenten in der Gruppe von Antriebsradeinheiten (15, 16), Achseinheiten (18) und Führungsrädern (14, 17) eingerichtet sind.

8. Lasttransfereinrichtung (1) nach einem der Ansprüche 1 bis 7, wobei die Zugelemente (21, 21') an mindestens einem Endabschnitt (22, 22') des Halteelements (5, 6) angebunden befestigt sind.

9. Lasttransfereinrichtung (1) nach einem der Ansprüche 1 bis 8, wobei die Lasttragvorrichtung (52) mit einem Hubmotor (71) verbunden ist, wobei der Hubmotor (71) wirkend durch die Steuereinheit (60) gesteuert wird, für eine gesteuerte vertikale Bewegung der Lasttragvorrichtung (52).

10. Lasttransfereinrichtung (1) nach einem der Ansprüche 1 bis 9, wobei ein Motor (10, 11) der Antriebsvorrichtung dazu fähig ist, im Uhrzeigersinn und im Gegenuhrzeigersinn zu drehen.

11. Lasttransfereinrichtung (1) nach einem der Ansprüche 1 bis 10, wobei ein Arbeitszyklus in einen Steuercomputer (61) der Steuereinheit (60) einprogrammiert ist, wobei der Arbeitszyklus der Antriebsvorrichtung, der Lasttragvorrichtung (52) oder dem Hubmotor (71) Eingabesignale für einen gesteuerten Betrieb der Lasttransfereinrichtung (1) bereitstellt.

12. Lasttransfereinrichtung (1) nach einem der Ansprüche 1 bis 11, wobei der Sensor (72) eingerichtet ist, ein sich bewegendes Objekt (73) zu erfassen und der Steuereinheit (60) Eingabesignale bereitzustellen, um die Lasttragvorrichtung (52) in der Nähe des sich bewegenden Objekts (73) zu docken und dem sich bewegenden Objekt (73) zu folgen.

13. Lasttransfereinrichtung (1) nach Anspruch 1, wobei die Steuervorrichtung (50) mit einem Lastzellenpaket (74) versehen ist.

14. Lasttransfereinrichtung (1) nach Anspruch 13, wobei die Lasttragvorrichtung (52) eingerichtet ist, in einen Modus versetzt zu werden, wobei in dem Modus die Lasttragvorrichtung (52) manuell in einem dreidimensionalen Raum führbar ist, und wobei eine Bewegung der Lasttragvorrichtung (52) durch aufgezeichnete und übertragene Krafteinwirkungen von dem Sensor (72) beziehungsweise dem Lastzellenpaket (74) zu der Antriebsvorrichtung beziehungsweise dem Hubmotor (71) gesteuert wird.

15. Lasttransfereinrichtung (1) nach Anspruch 14, wobei der manuelle Modus in einer vorbestimmten Zone aktivierbar ist.

16. Lasttransfereinrichtung (1) nach Anspruch 14, wobei der manuelle Modus in einer vorbestimmten Zone aktivierbar ist, wobei die Zone in Relation zu einem sich bewegenden Objekt bestimmt ist.

17. Lasttransfereinrichtung (1) nach einem der Ansprüche 13 bis 16, wobei die Lasttragvorrichtung (52) dazu fähig ist, zu stoppen, wenn ein Schwellwert von Krafteinwirkung durch das Lastzellenpaket (74) aufgezeichnet wird.

## Revendications

1. Un dispositif de transfert de charge (1) comprenant un dispositif de déplacement et un dispositif (52) porteur de charge, dans lequel ledit dispositif (52) porteur de charge est mobile dans un espace tridimensionnel, dans lequel ledit dispositif de déplacement comprend des éléments de support (5, 6), destinés à supporter un pont roulant (4) agencé pour se déplacer le long desdits éléments de support (5, 6), et un chariot (3) agencé pour se déplacer en avant et en arrière sur ledit pont roulant (4), le mouvement latéral dudit dispositif (52) porteur de charge étant effectué par un dispositif d'entraînement, ledit dispositif d'entraînement étant commandé par une unité de commande (60), ledit dispositif d'entraînement comprend au moins deux moteurs fixés audit chariot (3) et est pourvu de roues motrices d'entraînement (15, 16) et de deux éléments (21, 21') de traction fixés à ses portions d'extrémité et à des portions d'extrémité opposées desdits éléments de support (5, 6) et se croisant au niveau dudit pont roulant (4), lesdits éléments (21, 21') de traction qui se croisent au niveau dudit chariot (3) étant agencés de telle sorte qu'une première unité à roue motrice d'entraînement (15) fonctionne en contact avec un élément (21) de traction et une seconde unité à roue motrice d'entraînement (16) fonctionne en contact avec un autre élément (21') de traction, déplaçant ainsi le chariot (3), et donc la charge du dispositif de transport (52), dans une direction latérale au cours du fonctionnement, **caractérisé en ce que** ledit dispositif (52) porteur de charge est relié à un guide de couple linéaire rigide (2), comportant un dispositif de commande (50) comprenant un capteur (72) utilisé comme référence de force d'impact agencé pour guider et commander le dispositif d'entraînement et donc le dispositif (52) porteur de charge dans la direction latérale, et **en ce que** les éléments (21, 21') de traction, sur les extrémités respectives dudit pont roulant (4), sont disposés au moins partiellement autour d'une unité (18) formant arbre selon des directions différentes et en passant dans des gorges (24, 25) séparées.

2. Dispositif de transfert de charge (1) selon la revendication 1, dans lequel les éléments (21, 21') de traction, sur les extrémités respectives dudit pont roulant (4), sont disposés au moins partiellement autour d'une unité (18) formant arbre selon des directions différentes.

3. Dispositif de transfert de charge (1) selon l'une quelconque des revendications 1 à 2, dans lequel l'unité de commande (60) est munie d'une logique définie pour permettre des combinaisons de fonctionnement automatisées permettant une intervention manuelle.

4. Dispositif de transfert de charge (1) selon l'une quelconque des revendications 1 à 3, dans lequel les éléments (21, 21') de traction, sur les extrémités respectives dudit pont roulant (4), sont de préférence agencés selon un tour d'environ 90 degrés autour d'une unité (18) formant arbre, à partir de directions différentes et dans des gorges (24, 25) séparées.

5. Dispositif de transfert de charge (1) selon l'une quelconque des revendications 1 à 4, dans lequel les éléments (21, 21') de traction sont en contact non-glissant avec l'unité (15, 16) à roue motrice d'entraînement correspondante.

6. Dispositif de transfert de charge (1) selon l'une quelconque des revendications 2 à 5, dans lequel les éléments (21, 21') de traction sont en contact non-glissant avec la roue motrice d'entraînement correspondante, et l'unité (18) formant arbre, ladite unité (18) formant arbre comprenant une unité à roue rotative.

7. Dispositif de transfert de charge (1) selon l'une quelconque des revendications 1 à 6, dans lequel lesdits éléments (21, 21') de traction sont adaptés à un contact non-glissant avec l'un quelconque des éléments présent dans le groupe comprenant les unités (15, 16) à roues motrices d'entraînement, les unités (18) formant arbre et les roues de guidage (14, 17).

8. Dispositif de transfert de charge (1) selon l'une quelconque des revendications 1 à 7, dans lequel les éléments (21, 21') de traction sont fixés en étant attachés à au moins une portion d'extrémité (22, 22') de l'élément de support (5, 6).

9. Dispositif de transfert de charge (1) selon l'une quelconque des revendications 1 à 8, dans lequel le dispositif (52) porteur de charge est relié à un moteur de levage (71), ledit moteur de levage (71) étant fonctionnellement contrôlé par ladite unité de commande (60), pour un mouvement vertical contrôlé du dispositif (52) porteur de charge.

10. Dispositif de transfert de charge (1) selon l'une quelconque des revendications 1 à 9; dans lequel tout moteur (10, 11) dudit dispositif d'entraînement est capable de tourner dans le sens horaire et dans le sens antihoraire.

11. Dispositif de transfert de charge (1) selon l'une quelconque des revendications 1 à 10, dans lequel un cycle de travail est programmé dans un ordinateur de commande (61) de ladite unité de commande (60), ledit cycle de travail fournissant des signaux d'entrée à l'un quelconque parmi le dispositif d'entraînement, le dispositif (52) porteur de charge et le moteur de levage (71) pour un fonctionnement contrôlé dudit dispositif de transfert de charge (1).

12. Dispositif de transfert de charge (1) selon l'une quelconque des revendications 1 à 11, dans lequel ledit capteur (72) est agencé pour détecter un objet (73) en mouvement et pour fournir des signaux d'entrée à ladite unité de commande (60) pour l'accostage dudit dispositif (52) porteur de charge à proximité dudit objet (73) en mouvement et pour suivre ledit objet (73) en mouvement.

13. Dispositif de transfert de charge (1) selon la revendication 1, dans lequel le dispositif de commande (50) est pourvu d'un paquet de cellules de charge (74).

14. Dispositif de transfert de charge (1) selon la revendication 13, dans lequel ledit dispositif (52) porteur de charge est adapté pour être configuré dans un mode, lequel mode dudit dispositif (52) porteur de charge est apte à être manuellement guidé dans un espace à trois dimensions, et dans lequel le mouvement dudit dispositif (52) porteur de charge est commandé par des impacts de force enregistrés et transmis à partir dudit capteur (72) et dudit paquet de cellule de charge (74) respectivement audit dispositif d'entraînement et audit moteur de levage (71), respectivement.

15. Dispositif de transfert de charge (1) selon la revendication 14, dans lequel ledit mode manuel est activable dans une zone déterminée.

16. Dispositif de transfert de charge (1) selon la revendication 14, dans lequel ledit mode manuel est activable dans une zone déterminée, ladite zone étant déterminée par rapport à un objet en mouvement.

17. Dispositif de transfert de charge (1) selon l'une quelconque des revendications 13 à 16, dans lequel le dispositif (52) porteur de charge est apte à s'arrêter lorsqu'une valeur de seuil de force d'impact est enregistrée par ledit paquet de cellule de charge (74).
